# EUROPEAN PATENT APPLICATION

(11) **EP 2 626 386 A1**
(43) Date of publication of application: **14.08.2013**
(21) Application number: 11830641.4
(22) Date of filing: 04.10.2011
(51) Int. Cl.: C08L 101/00, C08K 3/00, C08L 67/04, C08L 101/16

(54) **BIODEGRADABLE RESIN COMPOSITION**

(30) Priority: 05.10.2010 JP 2010225834
(71) Applicant: Toyo Seikan Kaisha, Ltd., Shinagawa-ku Tokyo 141-8640 (JP); Kureha Corporation, Chuo-ku Tokyo 103-8552 (JP)
(72) Inventor: YOSHIKAWA, Seishi, Yokohama-shi Kanagawa 240-0062 (JP); KATAYAMA, Tsutaki, Yokohama-shi Kanagawa 240-0062 (JP); KOGURE, Masahito, Yokohama-shi Kanagawa 240-0062 (JP); YAMANE, Kazuyuki, Tokyo 103-8552 (JP)
(74) Representative: Raynor, Stuart Andrew
(86) International application number: PCT/JP2011/072819
(87) International publication number: WO 2012/046709

(57) **Abstract**

[Problem] To provide a biodegradable resin composition which permits the biodegradable resin to quickly decompose.

[Means for Solution] The biodegradable resin is blended with a polyglycolic acid and an ester decomposition promoter of an inorganic particulate material that promotes the hydrolysis of the polyglycol.

## Description

### Technical Field:

This invention relates to a biodegradable resin composition containing, as a chief component, sparingly hydrolyzable biodegradable resins such as polylactic acid and the like. More specifically, the invention relates to a biodegradable resin composition of biodegradable resins having enhanced degradability and to formed articles obtained by forming the biodegradable resins.

### Background Art:

In recent years, biodegradable resins are drawing attention from the standpoint of environmental problems in a variety of fields. Specifically, biodegradable resins such as polylactic acid and the like are sparingly hydrolyzable and remain stable even when they are brought into contact with water. Therefore, there have been placed in practice a variety of formed articles obtained by forming such sparingly hydrolizable biodegradable resins. For instance, a patent document 1 is proposing a lactic acid type resin composition comprising chiefly a polylactic acid, and a formed product thereof.

Here, a formed article made of a biodegradable resin such as polylactic acid is sparingly hydrolyzable and requires a time before it starts decomposing by the action of enzyme. Specifically, a formed article such as container starts decomposing from the surface of the formed article by the action of enzyme, and requires a very extended period of time before the biodegradable resin forming the formed article is completely decomposed without utilizing the biodegradable property to a sufficient degree.

In order to solve the above problem, the present applicant has previously proposed a biodegradable resin composition comprising a biodegradable resin such as polylactic acid blended with an aliphatic polyester such as polyethylene oxalate as an ester decomposition promoter (see patent document 2).
The aliphatic polyester such as polyethylene oxalate added to the biodegradable resin composition is easily hydrolyzable, and easily undergoes the hydrolysis to release acid when it is mixed with water and, therefore, works as an ester decomposition promoter. That is, hydrolysis of the biodegradable resin is promoted by the acid that is released and, therefore, decomposition of the biodegradable resin is very promoted by the enzyme. Further, when the formed article such as container formed of the biodegradable resin composition is mixed with an aqueous solution of enzyme, cracks occur in the formed article due to the hydrolysis of the aliphatic polyester and, as a result, the enzyme easily permeates into the interior of the formed article causing the biodegradable resin to decompose from the interior of the formed article, too, offering an advantage in that decomposition of the biodegradable resin is very promoted by the enzyme even if it is in the form of a formed product.

Further, a patent document 3 proposes a resin composition containing a biodegradable resin and alkali-gradually-releasing particles. In this resin composition, the alkali-gradually-releasing particles have a shell-core structure containing an alkaline material as a core and a porous material as a shell, and also work as an ester decomposition promoter. That is, if the resin composition is thrown into an aqueous solution of enzyme, the alkali-gradually-releasing particles gradually release an alkaline material which promotes the hydrolysis of the biodegradable resin, and decomposition of the biodegradable resin is promoted by the enzyme.

### Prior Art Documents:

### Patent Documents:

Patent document 1: JP-A-11-116788
Patent document 2: WO2008-038648
Patent document 3: JP-A-2009-57408

### Outline of the Invention:

### Problems that the Invention is to Solve:

In the biodegradable resin composition blended with the aliphatic polyester or the alkali-gradually-releasing particles that work as an ester decomposition promoter, however, the acid or the alkali is only gradually released from the decomposition promoter when it comes in contact with water. Therefore, though biodegradation of the biodegradable resin is promoted as compared to when it is not blended with the ester decomposition promoter, the degree of biodegradation is not still sufficient and it has been desired to further improve the biodegrading property.

It is, therefore, an object of the present invention to provide a biodegradable resin composition which permits the biodegradable resin to quickly decompose, and a formed article obtained by forming the biodegradable resin composition.

### Means for Solving the Problems:

According to the present invention, there is provided a biodegradable resin composition comprising a sparingly hydrolyzable biodegradable resin (A), a polyglycolic acid (B), and an ester decomposition promoter (C) of an inorganic particulate material that promotes the hydrolysis of the polyglycolic acid.
According to the present invention, there is further provided a formed article obtained by forming the above biodegradable resin composition.

In the biodegradable resin composition of the present invention, it is desired that:
(1) The inorganic particulate material is a basic compound containing an alkali metal or an alkaline earth metal;
(2) The basic compound is a calcium carbonate and/or a sodium carbonate; and
(3) The polyglycolic acid (B) is contained in an amount of 0.01 to 30 parts by weight per 100 parts by weight of the biodegradable resin (A), and the ester decomposition promoter (C) is contained in an amount of 28 to 200 parts by weight per 100 parts by weight of the polyglycolic acid (B).

### Effects of the Invention:

In the biodegradable resin composition of the present invention, the polyglycolic acid (B) undergoes the hydrolysis upon coming in contact with water to release the acid that works as an ester decomposition catalyst promoting the decomposition of the sparingly hydrolyzable biodegradable resin in the resin composition. Here, in the invention, the inorganic particulate material (e.g., calcium carbonate) is contained as the ester decomposition promoter (C) to promote the hydrolysis of the polyglycolic acid (B). That is, the polyglycolic acid (B) is a polymer and undergoes the hydrolysis upon coming in contact with water, i.e., undergoes the organic reaction at a rate which is very smaller than that of the ordinary inorganic reaction. With the polyglycolic acid (B) only being added as the ester decomposition promoter, therefore, the rate of hydrolysis by the polyglycolic acid (B) is so small that a considerable period of time is required until the hydrolysis of the biodegradable resin is promoted by the acid that is released (i.e., the biodegradable resin decomposes at a small initial rate). Here, however, the inorganic particulate material added as the ester decomposition promoter (C) as is done in the present invention promotes the hydrolysis (release of acid) of the polyglycolic acid (B). Besides, the ester decomposition promoter works to promote the hydrolysis of the sparingly hydrolyzable biodegradable resin itself, too. As a result, the hydrolysis promoting function due to the polyglycolic acid (B) is exhibited in a short period of time (initial rate of decomposition of the biodegradable resin increases), the hydrolysis of the biodegradable resin is also promoted by the ester decomposition promoter (C), and the rate of biodegradation can be greatly improved.

According to the present invention as described above, the formed article obtained by forming the biodegradable resin composition can be quickly decomposed offering a great advantage alleviating the destruction of environment caused by an increase in the amount of garbage and, further, making it possible to recover the used formed articles and to use the biodegraded resin as a resource again.

### Brief Description of the Drawings:

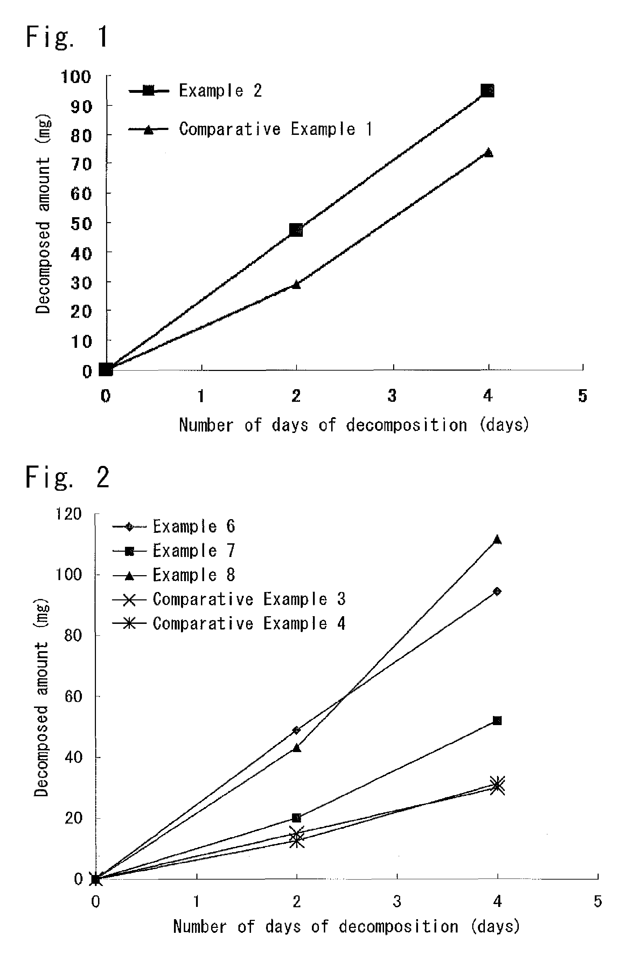

[Fig. 1] is a drawing showing relationships between the times for decomposition and the decomposed amounts of the films formed by using a biodegradable resin composition having a PGA molecular weight of 100,000.
[Fig. 2] is a drawing showing relationships between the times for decomposition and the degraded amounts of the films formed by using a biodegradable resin composition having a PGA molecular weight of 200,000.

### Mode for Carrying Out the Invention:

The biodegradable resin composition of the present invention contains the sparingly hydrolyzable biodegradable resin (A) as a chief component, is blended with the polyglycolic acid (B) and the ester decomposition promoter (C) and is, further, blended with known additives in suitable amounts as required, and is produced by melt-kneading the above components by using an extruder or the like.

### <Biodegradable resin (A)>

In the present invention, the biodegradable resin that is used is sparingly hydrolyzable, and is the one that is obtained by freeze-pulverizing the biodegradable resin into a powder, preparing an aqueous dispersion solution thereof at a concentration of 10 mg/10 ml, and has a TOC (total organic carbon amount) of not more than 5 ppm in the solution remaining after incubated at 45°C for one week. The water-soluble polyester is not contained. As the sparingly hydrolyzable biodegradable resin, there can be exemplified polylactic acid, polyhydroxyalkanoate, polycaprolactone, polybutylene succinate and cellulose acetate which can be used in the form of a copolymer or a blend.

The polylactic acid may comprise either a 100% poly-L-lactic acid or a 100% poly-D-lactic acid, may be a molten blend of the poly-L-lactic acid and the poly-D-lactic acid, may be a random copolymer of the L-lactic acid and the D-lactic acid, or may be a block copolymer thereof.

Further, the biodegradable resin (A) can be used in the form of a copolymer obtained by copolymerizing various kinds of aliphatic polyhydric alcohols, aliphatic polybasic acids, hydroxycarboxylic acids and lactones so far as the properties of the biodegradable resin are not impaired.
As the polyhydric alcohol, there can be exemplified ethylene glycol, propylene glycol, butanediol, octanediol, dodecanediol, neopentyl glycol, glycerin, pentaerythritol, sorbitan and polyethylene glycol.
As the polybasic acid, there can be exemplified oxalic acid, succinic acid, adipic acid, sebacic acid, glutaric acid, decanedicarboxylic acid, cyclohexanedicarboxylic acid and terephthalic acid.
As the hydroxycarboxylic acid, there can be exemplified glycolic acid, hydroxypropionic acid, hydroxyvaleric acid, hydroxycaproic acid and mandelic acid.
As the lactone, there can be exemplified caprolactone, butylolactone, valerolactone, propiolactone, undecalactone, glycolyde and mandelide.

From the standpoint of formability, further, the above biodegradable resin (A) should have a molecular weight large enough for forming a film and should, usually, have a weight average molecular weight in a range of 5,000 to 1,000,000 and, specifically, 10,000 to 500,000.

In the present invention, the polylactic acid is best suited from such a standpoint that it is preferably used in the field of packing materials such as containers and the like.

The above biodegradable resin (A) is sparingly hydrolyzable and requires very extended periods of time for being decomposed. Therefore, the following polyglycolic acid (B) and ester decomposition promoter (C) are added thereto to increase the rate of decomposition.

### <Polyglycolic acid (B)>

The polyglycolic acid (B) is an easily hydrolyzable polymer which, when mixed with water, releases an acid that works as a catalyst for decomposing the ester. For this purpose, the polyglycolic acid (B) having a weight average molecular weight of, for example, about 1,000 to about 500,000 is used so that it homogeneously disperses in the whole biodegradable resin (A) and that the acid released from the polyglycolic acid (B) quickly promotes the hydrolysis of the biodegradable resin (A).

The polyglycolic acid (B) is used in an amount of, usually, 0.01 to 30 parts by weight and, specifically, 1 to 10 parts by weight per 100 parts by weight of the biodegradable resin (A) though the amount may differ depending on the kind thereof. This is because if the polyglycolic acid (B) is used in too small amounts, it may become difficult to promote the decomposition of the biodegradable resin (A). If the polyglycolic acid having a molecular weight of, for example, not more than 20, 000 is used in too large amounts, then the biodegradable resin starts decomposing in the step where the resin composition is being prepared or in the step where the resin composition is being used as a formed article.

### <Ester decomposition promoter (C)>

The ester decomposition promoter (C) is an inorganic particulate material used for promoting the hydrolysis of the polyglycolic acid (B) and its representative examples include a basic compound containing an alkali metal or an alkaline earth metal and zeolite or an ion-releasing filler that releases ions of an alkali metal or an alkaline earth metal. The inorganic particulate material promotes the hydrolysis of the polyglycolic acid (B) during the forming and/or in the presence of water.

As the basic compound containing an alkali metal or an alkaline earth metal, there can be exemplified sodium carbonate, potassium carbonate, calcium carbonate, magnesium carbonate, sodium hydrogencarbonate, potassium hydrogencarbonate, sodium silicate, potassium silicate, calcium silicate, magnesium silicate, sodium phosphate, calcium hydroxide and magnesium hydroxide.

As the zeolite, there can be used a variety kinds of natural or synthetic zeolites containing ions of alkali metals or alkaline earth metals as exchangeable ions.

As the ion-releasing fillers, there can be exemplified oxide glasses such as aluminosilicate glass containing an alkali metal or an alkaline earth metal, borosilicate glass and soda-lime glass, and fluoride glasses such as zirconium fluoride glass.

The above ester decomposition promoters (C) may be used alone or being mixed together.

Among the above-mentioned inorganic particulate materials according to the present invention, it is desired to use the basic compound containing calcium and/or sodium, zeolite that is capable of releasing calcium ions and/or sodium ions, or calcium ion- and/or sodium ion-releasing filler and, specifically, to use the calcium carbonate or the sodium carbonate from the standpoint of not adversely affecting the properties of the biodegradable resin (A) and not decomposing the inorganic particulate material when the resin composition is being heat-formed.

It is, further, desired that the inorganic particulate material has an average grain size (average grain size D₅₀ calculated as volume based on the laser diffraction light scattering method) of not more than 10 *µ*m and, specifically, in a range of 0.01 *µ*m to 5 *µ*m from the standpoint of being homogeneously dispersed in the resin composition.

It is desired that the inorganic particulate material is used in an amount of 28 to 200 parts by weight and, specifically, 30 to 100 parts by weight per 100 parts by weight of the polyglycolic acid (B). If the amount of the inorganic particulate material is too large, there often occurs such inconvenience that heat-formability of the resin composition is impaired, the polyglycolic acid (B) and the biodegradable resin (A) are hydrolyzed in an accelerated manner in the formed article which is obtained by forming the resin composition, and the state of the formed article is impaired. If the amount of the inorganic particulate material is too small, it may often become difficult to increase the rate of decomposition of the biodegradable resin.
Among the above-mentioned inorganic particulate materials, the sodium carbonate works most greatly to promote the hydrolysis of the polyglycolic acid (B) and the biodegradable resin (A). When the sodium carbonate is used alone, therefore, it often happens that the molecular weight of the biodegradable resin (A) greatly decreases during the heat-forming and the value of the product decreases due to discoloration of the biodegradable resin (A). When the sodium carbonate is used, therefore, it is desired that the amount thereof is adjusted to lie in a range of 0.1 to 35 ppm relative to the biodegradable resin (A) and, further, it is used in combination with the calcium carbonate. This makes it possible to suppress a decrease in the molecular weight of the biodegradable resin (A) yet promoting the decomposition of the polyglycolic acid during the forming and, besides, to increase the rate of decomposition of the biodegradable resin composition with the enzyme. When the sodium carbonate and the calcium carbonate are used in combination as described above, it is desired that the total amount thereof is within the above-mentioned range, i.e., in the range of from 28 to 200 parts by weight and, specifically, 30 to 100 parts by weight per 100 parts by weight of the polyglycolic acid (B).

### <Other blending agents>

The biodegradable resin composition of the present invention may be, further, blended, in addition to the above-mentioned components, with various additives for resins, such as plasticizer, photo stabilizer, anti-oxidant, ultraviolet-ray absorber, flame-retarding agent, coloring agent, pigment, filler, parting agent, antistatic agent, perfume, foaming agent, anti-bacterial/anti-molding agent and nucleating agent in such amounts as will not impair the formability or biodegradability of the biodegradable resin, and may be, further, blended with other thermoplastic resins, as required.

### <Preparation of the biodegradable resin composition and use>

The biodegradable resin composition of the present invention containing the above various components can be prepared by simultaneously mixing the above-mentioned components (A) to (C) and melt-kneading them together in an extruder at a temperature (e.g., about 150°C to about 240°C) at which the components are not decomposed. In this case, the polyglycolic acid (B), the ester decomposition promoter (C) and the biodegradable resin (A) may be mixed together simultaneously, or a master batch of the polyglycolic acid (B) and the ester decomposition promoter(C) may be prepared, and then the biodegradable resin (A) may be mixed therein.

The resin composition can be formed into a variety of articles by a known forming method such as extrusion forming, injection forming or compression forming, and can be favorably used in the field of packing materials.

In the field of the packing materials, for example, the biodegradable resin composition can be used as a film or a sheet for packing. Specifically, the film can be stuck and sealed along its three sides so as to be used as a bag-like container (pouch). Further, the film or the sheet can be formed into cup-like and tray-like containers by vacuum forming, pressure forming, expansion forming or plug-assist forming. The cup-like container and the tray-like container may be directly formed by the injection forming or the compression forming. Further, a preform of the shape of a test tube may be formed by the inj ection forming, and a container of the shape of a bottle can be formed by blow-forming the preform.

As required, further, the above-mentioned formed articles of various kinds can be obtained in the form of a multilayered structure being laminated with other resins by using an extruder equipped with a multilayered multiplexing die or by using a co-injector equipped with a plurality of injection gates. When the films are to be laminated in a multiplicity of layers, further, there can be used a dry laminating method using an adhesive, an extrusion coating method or a sandwich lamination method that laminates the films with a molten resin.

### <Method of decomposition>

The formed articles such as containers obtained by forming the biodegradable resin composition of the present invention can be decomposed by simply feeding them into a decomposition vessel but are preferably subjected to the decomposition treatment by cutting and crushing them into small pieces, and feeding them into the decomposition vessel.

The decomposition treatment is conducted in an aqueous medium in the presence of a catalyst. As the catalyst, there can be used a water-containing solid acid catalyst such as activated clay having a high specific surface area obtained by treating a smectite clay like acidic clay or bentonite with an acid. Preferably, however, an enzyme is used. That is, not only from the standpoint of effects upon the environment and the treatment of waste materials but also when the enzyme is used as a catalyst, the water permeates into the formed article permitting the polyglycolic acid (B) to undergo the hydrolysis from the interior of the molded article and accelerating the hydrolysis of the biodegradable resin (A). At the same time, the enzyme quickly permeates into the interior of the molded article (waste material) and, therefore, the biodegradable resin (A) also starts decomposing from the interior of the formed article, too, offering such a very great advantage that the formed article is decomposed in short periods of time until it is completely disintegrated.

As the enzyme, there can be exemplified protease, cellulase, cutinase and lipase which may have been solidified or may not have been solidified. For instance, the Protease K manufactured by Wako Junyaku Kogyo Co. is used in the form of an aqueous solution. It is, further, allowable to introduce microorganisms to use an exobacterial enzyme thereof. There may be also added culture components and nutrient components needed for the microorganisms.

As for the solvent during the decomposition treatment, the reaction solution is exchanged or a buffer solution is used as the reaction solution in order to prevent a change of the pH in the enzymatic reaction solution. As the buffer solution, there can be exemplified a glycine-hydrochloric acid buffer solution, phosphoric acid buffer solution, tris-hydrochloric acid buffer solution, acetic acid buffer solution, citric acid buffer solution, citric acid-phosphoric acid buffer solution, boric acid buffer solution, tartaric acid buffer solution and glycine-sodium hydroxide buffer solution. Instead of the buffer solution, further, there may be used a solid neutralizing agent and water as a solvent. Examples thereof may include calcium carbonate, chitosan and proton-free ion-exchange resin. An acid or an alkali may be suitably added to the reaction solution to neutralize it. As required, further, an organic solvent such as ethanol may be added.

Namely, it is desired that the waste formed articles of the biodegradable resin composition are mixed and kneaded together with the enzymatic aqueous solution in the decomposition vessel so as to be decomposed. Here, the amount of the enzyme that is used may differ depending upon the activity of the enzyme that is used but is, usually, about 0.01 to about 10 parts by weight per 100 parts by weight of the sparingly hydrolyzable biodegradable resin. The waste formed articles are thrown into the enzymatic aqueous solution filled in the decomposition vessel, and are subjected to the decomposition treatment.
When the above solid acid catalyst is used, the solid acid catalyst is dispersed in a suitable organic solvent since the solid acid catalyst contains water, and the waste formed articles are thrown into the dispersion solution.

It is desired that the decomposition treatment is conducted being heated at a temperature lower than the temperature at which the enzyme loses activity (usually, about 50°C). Upon being thus heated, the polyglycolic acid (B) is hydrolyzed in a more accelerated manner.

As the decomposition is conducted as described above and the formed articles are completely disintegrated, the biodegradable resin has now been decomposed down into the monomers or oligomers that used to constitute the composition, and may then may be put to the energy conversion such as methane fermentation by utilizing microorganism. Or, as required, the monomers or oligomers may be recovered by the separation operation such as distillation or extraction, and may be reused for the synthesis of the biodegradable resin.

### EXAMPLES

### <Analysis>

### GPC by using an HFIP solvent.

Use was made of a GPC manufactured by Toso Co. and the HFIP-605 as the column. The temperature of the column oven was set at 40°C, an HFIP (hexafluoroisopropanol) was used as the eluent, and the flow rate was set to be 0.5 ml/min. The sample was injected in an amount of 15 *µ*l. As a standard, a polymethyl methacrylate was dissolved in the HFIP. The sample was prepared by using the HFIP as the solvent and at a concentration of 2 mg/ml by passing it through a filter.

### GPC by using a chloroform solvent.

Use was made of a GPC, HCL-8120, manufactured by Toso Co. , the TSKgel Super HM-Hx2 as the column and the TSKguard column Super H-H as the guard column. The temperature of the column oven was set at 40°C, a chloroform was used as the eluent, and the flow rate was set to be 0.5 ml/min. The sample was injected in an amount of 20 *µ*l. As a standard, a polystyrene was dissolved in the chloroform. The sample was prepared by using the chloroform as the solvent and at a concentration of 3 mg/ml by passing it through a filter.

### <Materials used>

### Polylactic acid (PLA):

Use was made of 4032D (d-lactic acid 1.4 ± 0.2%) manufactured by Natureworks Co.

### Polyglycolic acid (PGA):

Use was made of polyglycolic acids (weight average molecular weights; 100,000, 200,000) manufactured by Kureha Co. Calcium carbonate:

Use was made of Brilliant 1500 (average grain size; 0.2 *µ*m) manufactured by Shiroishi Kogyo Co.

### Sodium carbonate:

Use was made of a product manufactured by Wako Junyaku Kogyo Co.

### Zeolite:

Use was made of the Zeolite 3A (Ca type) manufactured by Union Showa Co.

### Chitosan (organic base):

Use was made of a product manufactured by Wako Junyaku Kogyo Co.

### <Preparation of a film>

The materials were dry-blended together, and were kneaded by using a very small kneader (manufactured by Toyo Seiki Seisakusho Co.) at a forming temperature of 240°C and a screw rotational speed of 50 rpm to prepare pellets. The pellets were melted at 240°C for 5 minutes and were heat-pressed (hot-pressed) with a pressure of 50 to 80 Kgf/cm² to prepare a film.

### <Testing the decomposition with enzyme>

### Preparation of a CLE enzyme solution and a decomposition solution:

The CLE enzyme solution was obtained by dissolving 20 mg of a powder of Cryptococcus sp. s-2-derived lipase (JP-A-2004-73123, National Research Institute of Brewing, Independent Administrative Institution) in 1 ml of a 0.05 MTris-HCl buffer solution (pH 8.0) containing 50 w/w% of glycerin. The decomposition solution was obtained by adding 12 *µ*l of the CLE enzyme solution to 10 ml of a 60 mmols/L phosphoric acid buffer solution of pH 7.

### Testing the enzymatic decomposition:

The above film (2 cm × 2 cm, weighing 70 to 80 mg) and 10 ml of the above decomposition solution were put into a 25-ml vial, and were shaken at 45°C and 100 rpm for 6 days. In order to avoid a sharp drop in pH, the period of 4 days was divided into 2 days and 2 days and in which the decomposition solution was exchanged. After 4 days have passed, the film was taken out, dried in an oven at 45 °C overnight, and was measured for its weight. The amount of the film decomposed was found in compliance with (initial weight of the film) - (weight of the film after 4 days have passed).

### <Measuring the ratio of retention of the molecular weight>

The PLA and the PLA film prepared by the above method were measured by the GPC by using the chloroform solvent. Denoting the molecular weight of the PLA by Mw (before) and the molecular weight of the prepared film by Mw (after), the ratio of retention of the molecular weight was found according to Mw (after)/Mw (before) × 100. The ratios of retention of the molecular weight of not less than 60% were regarded to be ○.

### <Examples 1 to 8, Comparative Examples 1 to 4>

Various materials shown in Table 1 were blended together at predetermined ratios to prepare films according to the above-mentioned forming method. The obtained films were measured for their ratios of retention of the molecular weight and were tested for their enzymatic decomposition to obtain the results as shown in Table 1.

**Table 1**

| | *1 | PGA/decomposition promoter | | | | |
|---|---|---|---|---|---|---|
| | Blending ratio | Material | Blending ratio | *2 | *3 | *4 |
| Ex. 1 | 94:6 | PGA (Mw 100,000)/Ca carbonate | 2:1 | - | ○ | 95 |
| Ex. 2 | 94:6 | PGA (Mw 100,000)/Ca carbonate | 3:1 | - | ○ | 80 |
| Ex. 3 | 95:5 | PGA (Mw 100,000)/Ca carbonate | 1:1 | - | ○ | 80 |
| Ex. 4 | 94:6 | PGA (Mw 100,000)/zeolite | 2:1 | - | ○ | 52 |
| Ex. 5 | 94:6 | PGA (Mw 100,000)/Ca carbonate | 0:2:1 | - | × | - |
| Ex. 6 | 94:6 | PGA (Mw 200,000)/Ca carbonate | 2:1 | - | ○ | 94 |
| Ex. 7 | 94:6 | PGA (Mw 200,000)/zeolite | 2:1 | - | ○ | 51 |
| Ex. 8 | 94:6 | PGA (Mw 200,000)/Ca carbonate + Na carbonate | 2:1 | 4ppm | ○ | 111 |
| Comp. Ex. 1 | 95:5 | PGA (Mw 100,000)/- | 5:0 | - | ○ | 73 |
| Comp. Ex. 2 | 95:5 | PGA (Mw 200,000)/- | 5:0 | - | ○ | 37 |
| Comp. Ex. 3 | 100 | - | - | - | ○ | 30 |
| Comp. Ex. 4 | 94:6 | PGA (Mw 200,000)/chitosan | 2:1 | - | ○ | 31 |

| | | | | | | |
|---|---|---|---|---|---|---|
| *1: PLA/PGA + decomposition promoter *2: Amount of Na carbonate (ppm) *3: Ratio of molecular weight retentivity *4: Amount of enzymatic decomposition after 4 days (mg) | | | | | | |

## Claims

1. A biodegradable resin composition comprising a sparingly hydrolyzable biodegradable resin (A), a polyglycolic acid (B), and an ester decomposition promoter (C) of an inorganic particulate material that promotes the hydrolysis of said polyglycolic acid.

2. The biodegradable resin composition according to claim 1, wherein said inorganic particulate material is a basic compound containing an alkali metal or an alkaline earth metal.

3. The biodegradable resin composition according to claim 2, wherein said basic compound is a calcium carbonate and/or a sodium carbonate.

4. The biodegradable resin composition according to claim 1, wherein said polyglycolic acid (B) is contained in an amount of 0.01 to 30 parts by weight per 100 parts by weight of the biodegradable resin (A), and said ester decomposition promoter (C) is contained in an amount of 28 to 200 parts by weight per 100 parts by weight of said polyglycolic acid (B).

5. A formed article obtained by forming the biodegradable resin composition of claim 1.
